# EUROPÄISCHE PATENTSCHRIFT

(11) **EP 1 970 736 B1**
(45) Veröffentlichungstag und Bekanntmachung des Hinweises auf die Patenterteilung: **02.06.2010**
(21) Anmeldenummer: 07005228.7
(22) Anmeldetag: 14.03.2007
(51) Int. Cl.: G02B 6/42, B60R 1/12, B60Q 1/26

(54) **Rückblickspiegel für Fahrzeuge, vorzugsweise für Kraftfahrzeuge**
Outside rear view mirror for vehicles, especially for motor vehicles
Rétroviseur extérieur pour véhicules, de préférence pour véhicules automobiles

(43) Veröffentlichungstag der Anmeldung: 17.09.2008
(73) Patentinhaber: SMR Patents S.à.r.l., 1653 Luxembourg (LU)
(72) Erfinder: Kuhn, Jörg, 70190 Stuttgart (DE); Erber, Andreas, 73760 Ostfildern (DE); Pimer, Alexander, 73779 Delzisau (DE); Secanu, Florin, 72622 Nürtingen (DE)
(74) Vertreter: Rausch, Gabriele

(56) Entgegenhaltungen:
- DE-A1- 19 808 393
- US-A- 5 223 814
- US-A1- 2004 257 790
- US-A1- 2006 012 990

## Beschreibung

Die Erfindung betrifft einen Rückblickspiegel für Fahrzeuge, vorzugsweise für Kraftfahrzeuge, nach dem Oberbegriff des Anspruches 1.

Es sind Rückblickspiegel bekannt, bei denen Anzeigen hinter dem Spiegelglas vorgesehen sind. Sie sind aufwändig ausgebildete Systeme, die aus einer Anzeige und einer für die Anzeige konzipierten elektronischen Schaltung bestehen. Im Bereich der Anzeigen sind die reflektierenden Beschichtungen der Spiegel entfernt, so dass die Anzeige in einem breiten Abstrahlwinkel optische Informationen in Form von Schrift, Symbol und/oder Warnlichtern abstrahlen können.

Aus der DE 198 08 393 A1 ist eine Anzeigevorrichtung für Kraftfahrzeuge bekannt, bei der optische Informationen über die Spiegelfläche eines Rückblickspiegels an den Fahrer oder andere Verkehrsteilnehmer übermittelt werden. Dazu wird von einer Lichtquelle Licht in die Stirnfläche eines Lichtleiters emittiert und an dessen anderer Stirnseite im Gehäuse im Wesentlichen parallel zur Spiegelfläche durch die Lichtaustrittsöffnungen im Spiegelglas oder des Spiegelgehäuses abgestrahlt. Durch die optischen Informationen werden andere Verkehrsteilnehmer irritiert und sogar beeinträchtigt.

Aus der WO 00/06944 ist ein Außenrückblickspiegel mit einer Anzeigeeinheit bekannt, die hinter einem Spiegelglas liegt. Hierbei wird Licht von einer Lichtquelle über eine Sammeloptik und eine Optikscheibe auf eine Filterfolie abgestrahlt, die das Licht ausrichtet.

US 2006/0012990 A1 beschreibt ein Außenrückspiegel gemäß dem Oberbegriff des Anspruchs 1.

Die Erfindung liegt die Aufgabe zugrunde, den gattungsgemäßen Rückblickspiegel so auszubilden, dass bei einfacher konstruktiver Gestaltung das durch das Spiegelglas hindurchtretende Licht andere Verkehrsteilnehmer als den Fahrer nicht beeinträchtigt.

Diese Aufgabe wird beim gattungsgemäßen Rückblickspiegel erfindungsgemäß mit den kennzeichnenden Merkmalen des Anspruches 1 gelöst.

Beim erfindungsgemäßen Rückblickspiegel wird das aus dem Spiegelglas im reflexionsfreien Bereich austretende Licht zum Fahrer hingelenkt, so dass nur er, und nicht andere Verkehrsteilnehmer, das Licht wahrnehmen können. Dadurch besteht nicht die Gefahr, dass andere Verkehrsteilnehmer irritiert werden. Dabei ist der Rückblickspiegel einfach aufgebaut und kann sehr flachbauend ausgebildet sein. Hierzu trägt bei, dass die Lichtquelle ihr Licht unmittelbar in den Lichtleiter abstrahlt.

Der Lichtleiter ist vorteilhaft konstruktiv so ausgebildet, dass durch mehrfaches Umlenken des Lichtes eine verhältnismäßig große Abstrahlfläche für die Anzeige erreicht wird. Bisher gebräuchliche gleichwertige Systeme benötigen für die Ausleuchtung großer Anzeigeflächen ein Vielfaches an Bauraum für die hierfür notwendigen Optiken.

Im Bereich der Anzeige ist vorteilhaft auf der Rückseite des Spiegelglases entsprechend der Größe und Form der Anzeige die reflektierende Beschichtung entfernt.

Damit die Anzeige von einem außenstehenden Betrachter nicht direkt wahrgenommen werden kann, ist die Beschichtung in ihrer Schichtdicke vorzugsweise so weit reduziert, dass ein Durchscheinen der Anzeige ermöglicht wird.

Als weitere Variante kann im Anzeigebereich die reflektierende Beschichtung in sehr schmalen und mit geringem Abstand voneinander angeordneten Streifen ausgenommen sein. Bei einer solchen Ausführung besteht für den Betrachter im nichtbeleuchtetem Zustand der Eindruck einer verspiegelten Fläche und im beleuchteten Zustand einer homogenen geschlossenen leuchtenden Anzeige.

Der Lichtleiter hat vorteilhaft eine Umlenkoptik, mit der die Lichtstrahlen der Lichtquelle so umgelenkt werden, dass diese ausschließlich unter einem vorgegebenen Winkel abgestrahlt werden können. Als zusätzliche Absicherung dieser Lichtausrichtung ist eine in die gleiche Richtung filternde Folie vorgesehen. Somit wird sichergestellt, dass der nachfolgende Verkehr beziehungsweise andere sich seitlich befindliche Verkehrsteilnehmer keines dieser Signale wahrnehmen können.

Die Anzeige mit ausgerichteter Abstrahlrichtung ist selbstverständlich mit anderen Anzeigen, wie beispielsweise Positionsleuchten oder Fahrtrichtungsanzeigern, kombinierbar. Hierzu können die weiteren Anzeigen als Teil einer gesamten Anzeigeneinheit in einer Baugruppe kombiniert werden.

Beim erfindungsgemäßen Rückblickspiegel kann das Licht auch durch einen lichtdurchlässigen Bereich des das Spiegelglas umgebenden Rahmens austreten. Dabei wird das Licht ebenfalls zum Fahrer hin gelenkt, so dass nur er, und nicht andere Verkehrsteilnehmer, das Licht wahrnehmen können. Die Lichtführung vom Leuchtmittel zum Austrittsbereich im Rahmen ist vorteilhaft gleich ausgebildet wie beim Durchtritt des Lichtes durch das Spiegelglas.

Weitere Merkmale der Erfindung ergeben sich aus den weiteren Ansprüchen, der Beschreibung und den Zeichnungen.

Die Erfindung wird anhand mehrer in den Zeichnungen dargestellter Ausführungsbeispiele näher erläutert. Es zeigt:
- Fig. 1: im Schnitt einen erfindungsgemäßen Rückblickspiegel mit einer Anzeigeeinheit,
- Fig. 2: in perspektivischer Darstellung die Anzeigeeinheit nach Fig. 1,
- Fig. 3: einen Lichtleitkörper der Anzeigeeinheit nach Fig. 2 in perspektivischer Darstellung,
- Fig. 4: den erfindungsgemäßen Rückblickspiegel in perspektivischer Darstellung,
- Fig. 5: eine weitere Ausbildung einer Anzeige,
- Fig. 6: einen Teil eines erfindungsgemäßen Rückblickspiegels mit einer symbolisch angedeuteten Anzeige,
- Fig. 7: einen Schnitt durch eine mehrteilige Anzeige, die hinter einem Spiegelglas des Rückblickspiegels angeordnet ist.

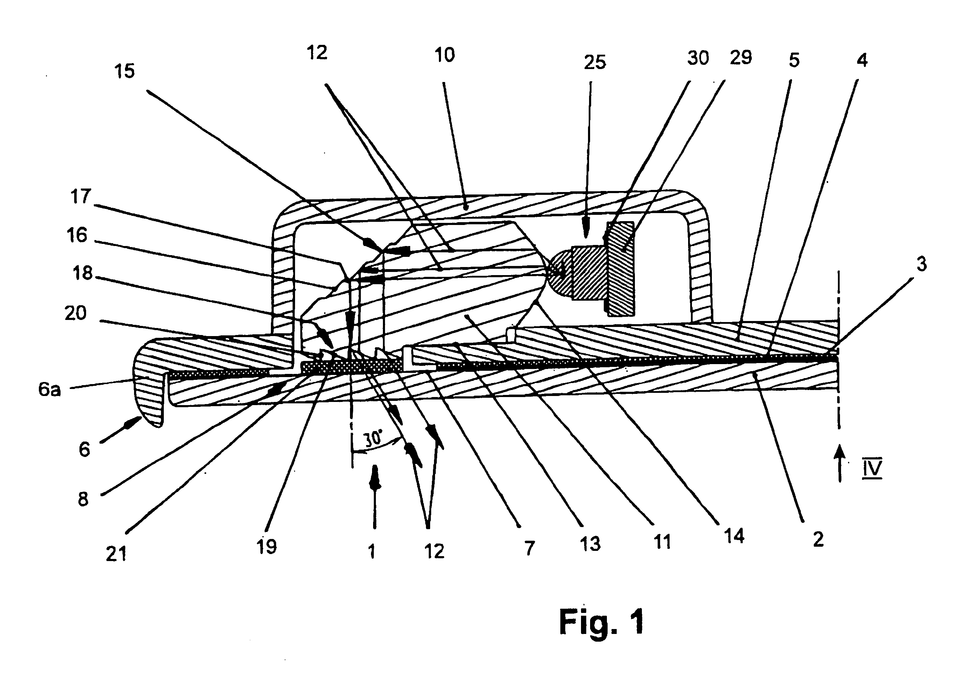

Beim Rückblickspiegel nach Fig. 1 ist hinter einem Spiegelglas 2 eine Anzeige 1 vorgesehen. Das Spiegelglas 2 ist auf seiner Rückseite mit einer reflektierenden Schicht 3 versehen, auf die eine Klebeschicht 4 zum Verbinden des Spiegelglases 2 mit einer Trägerplatte 5 aufgebracht ist. Die Klebeschicht 4 kann durch eine beidseitig klebende beschichtete Folie gebildet sein. Die Klebeschicht kann aber auch auf nur einer Seite mit einer dünn aufgetragenen Beschichtung versehen sein, die auf die Trägerplatte 5 oder auf die Rückseite des Spiegelglases 2 aufgebracht ist. Die Trägerplatte 5, die üblicherweise aus Kunststoff besteht, wird bei Außenrückblickspiegeln um zwei Achsen schwenkbar in einem Spiegelgehäuse befestigt. Die Trägerplatte 5 kann dadurch mechanisch oder elektrisch zur Einstellung des Spiegelglases verstellt werden. Bei Innenrückblickspiegeln ist üblicherweise das Spiegelgehäuse mit dem Spiegelglas 2 fest verbunden. Das Spiegelgehäuse kann entsprechend dem Blickwinkel des Fahrers verstellt werden.

Das Spiegelglas 2 ist im dargestellten Ausführungsbeispiel für einen Außenspiegel vorgesehen. Zum Schutz des Spiegelglases 2 ist die Trägerplatte 5 an ihrem Rand als Rahmen 6 ausgebildet, der im Querschnitt L-förmig ausgebildet ist und mit seinem äußeren Schenkel 6a das Spiegelglas 2 mit geringem Abstand umgibt. Der Schenkel 6a liegt senkrecht zum Spiegelglas 2 und steht über das Spiegelglas vor. Durch diese Ausbildung wird verhindert, dass das Spiegelglas 2 an seinem sehr empfindlichen Außenrand durch Stöße oder dergleichen beschädigt oder zerstört werden kann.

Auf der dem Spiegelglas 2 gegenüberliegenden Seite der Trägerplatte 5 befindet sich die Anzeige 1. Sie hat wenigstens ein Leuchtmittel 25, vorzugsweise eine LED, die auf einer Platine 29 befestigt ist. Sie ist auf der dem Leuchtmittel 25 zugewandten oder auf der von ihr abgewandten Seite mit Leiterbahnen 30, sogenannten Printbahnen, versehen, mit denen das Leuchtmittel 25 elektrisch leitend verbunden ist. Das vom Leuchtmittel 25 ausgestrahlte Licht 12 wird einem Lichtleiter 11 zugeführt, an dem das Leuchtmittel 25 vorteilhaft anliegt. Diese Seite des Lichtleiters 11 ist optisch so ausgebildet, dass die Strahlen 12 nahezu parallel innerhalb des Lichtleiters weitergeleitet werden. Derartige Lichtleiter 11 bestehen in der Regel aus einem veredelten Polymethylmethacrylat (PMMA). Um den Lichtleiter 11 1 genau gegenüber dem Leuchtmittel 25 ausrichten zu können, ist er mit einer Bezugsfläche 13 versehen, mit der er an der Trägerplatte 5 anliegend befestigt wird. Die Bezugsfläche 13 ist vorteilhaft eben.

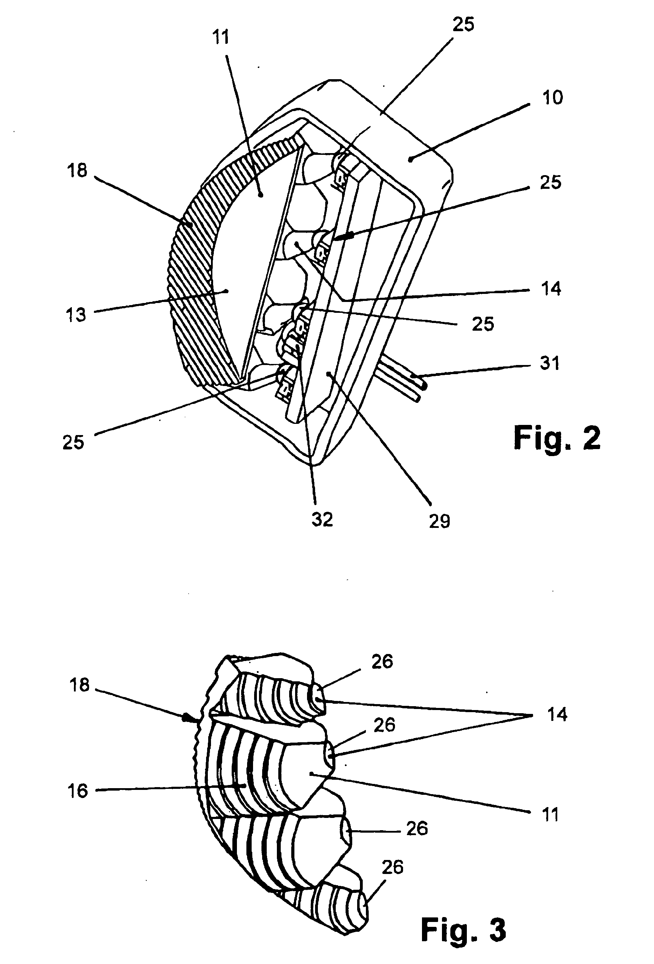

Wie sich aus den Fig. 2 und 3 ergibt, hat der Lichtleiter 11 an der Einkoppelseite konisch verjüngte Einkoppeloptiken 14 mit jeweils einer Stirnseite 26, die an die Form des jeweiligen Leuchtmittels 25 angepasst ist. Mit Hilfe dieser Optiken 26 werden die Lichtstrahlen 12 nahezu parallel bis zu einer Reflexionsseite 15 geleitet, die der Einkoppelseite gegenüberliegt. Im Ausführungsbeispiel ist die Reflexionsseite aus mehreren gestuften Reflexionsflächen 16 gebildet, zwischen denen Trennflächen 17 vorgesehen sind, die in ihrer Ausrichtung parallel zu den auf den Reflexionsflächen 16 auftreffenden Lichtstrahlen 12 ausgerichtet sind. Die Trennflächen 17 liegen, im Schnitt gemäß Fig. 1 gesehen, im Ausführungsbeispiel parallel zum Spiegelglas 2. Die Lichtstrahlen 12 werden an den Reflexionsflächen 16 in Richtung auf das Spiegelglas 2 umgelenkt und treffen auf eine Umlenkoptik 18, die die Lichtstrahlen 12 unter einem definierten Winkel, im Ausführungsbeispiel zum Beispiel unter einem Winkel von 30°, ablenkt.

Die Umlenkoptik 18 besteht im Wesentlichen aus quer zu den Lichtstrahlen 12 angeordneten Flächen 19, die entsprechend dem Ablenkwinkel schräg aus dem Lichtleiter 11 herausgearbeitet sind. In diesem Fall sind, wie anhand der Reflexionsflächen 16 beschrieben, zwischen den einzelnen Flächen 19 Trennflächen 20 vorgesehen. Sie sind ebenfalls parallel zu den Lichtstrahlen 12 ausgerichtet, die auf die Umlenkoptik 18 auftreffen. Die im Wesentlichen quer zu den Lichtstrahlen 12 angeordneten Umlenkflächen 19 sind vorteilhafterweise innerhalb der Projektion der von den Reflexionsflächen 16 umgelenkten Lichtstrahlen 12 angeordnet.

Zwischen der Umlenkoptik 18 des Lichtleiters 11 und der Rückseite des Spiegelglases 2 ist ein Filter 21 vorgesehen, der einen zumindest teilweisen reflexionsfreien Bereich 7 einer Lichtaustrittsfläche 8 des Spiegelglases 2 nahezu ausfüllt. Der Filter 21 ist als Folie ausgebildet und lässt auftreffendes Licht, das von der Umlenkoptik 18 auf die Folie gelenkt wird, nur in einer Abstrahlrichtung passieren. Von dieser Richtung abgewandte Lichtstrahlen 12 werden nicht durch die Filterfolie 21 hindurchgelassen und in den Lichtleiter 11 zurückreflektiert. Die Abstrahlrichtung stimmt mit dem Abstrahlwinkel der Lichtstrahlen 12 überein. Für eine einfache und schnelle Montage kann die Folie 21 zwischen der Umlenkoptik 18 und der Rückseite des Spiegelglases 2 kraftschlüssig eingespannt sein. Eine weitere Befestigungsmöglichkeit dieser Filterfolie 21 besteht darin, dass sie auf die Rückseite des Spiegelglases 2 aufgeklebt ist. Der Lichtleiter 11 liegt am Filter 21 an. Die Filterfolie 21 entspricht der umgebenden reflektierenden Beschichtung 3 des Spiegelglases 2 in Farbe und Erscheinung. Dadurch fällt sie bei nicht eingeschaltetem Leuchtmittel 25 nicht auf, wenn der Benutzer auf das Spiegelglas 2 schaut.

Für die hinter dem Spiegelglas 2 vorgesehene Anzeige 1 ist im Ausführungsbeispiel die reflektierende Beschichtung 3 des Spiegelglases 2 sowie die Klebeschicht 4 im Bereich der vorgesehenen Anzeige ausgespart. Ebenso ist in diesem Bereich die Trägerplatte 5 für die Anzeige 1 hinter dem Spiegelglas 2 durchbrochen. Die reflektierende Beschichtung 3 kann im Bereich der Anzeige 1 zumindest teilweise reflexionsfrei sein. Bei einer (nicht dargestellten) Ausführungsform ist die zumindest teilweise reflexionsfreie Beschichtung 3 durch dünne, dicht nebeneinander liegende Streifen ausgebildet. Bei nicht aktivierter Anzeige 1 erscheint dieser Bereich annähernd wie die reflektierende Spiegelbeschichtung 3, während bei aktivierter Anzeige eine homogene ausgeleuchtete Fläche sichtbar ist.

Fig. 2 zeigt die Anzeigeeinheit 1 als vollständig montierte Einheit zur Montage auf der Trägerplatte 5. Hierbei sind der Lichtleiter 11 sowie mehrere Leuchtmittel 25, die auf der Platine 29 befestigt sind, in einem Gehäuse 10 vormontiert. Die Befestigung dieser Bauteile kann über geeignete Mittel, wie Verrastungen oder Verschraubungen, erfolgen. Die Leuchtmittel 25 sind so auf der Platine 29 angeordnet, dass sie genau in den Brennpunkten der die Einkoppeloptik 14 bildenden Lichtleitersegmente angeordnet sind. Das von den Leuchtmitteln 25 in die Lichtleiter 11 eingestrahlte Licht wird an den Reflexionsflächen 16 abgelenkt und tritt im Bereich der Umlenkoptik 18 aus dem Lichtleiter 11 aus. An der Rückseite des Gehäuses 10 sind für die Stromversorgung der Leuchtmittel 25 Anschlusskabel 31 herausgeführt, die über elektrische Kontakte 32 mit der Platine 25 verbunden sind.

Die in Fig. 2 beispielhaft dargestellte Umlenkoptik 18 hat Sichelform. Entsprechend dieser Sichelform sind die einzelnen Lichtleitersegmente für eine homogene Ausleuchtung der Anzeigefläche ausgebildet und so angeordnet, dass eine gleichmäßige Ausleuchtung der Anzeigefläche gewährleistet ist. Aus Fig. 3 ist die Anordnung der Lichtleitersegmente erkennbar, die mit Abstand von der Umlenkoptik 18 nebeneinander angeordnet sind. Die Reflexionsflächen 16 der einzelnen Lichtleitersegmente sind als räumlich gekrümmte Flächen ausgebildet. Ihre Krümmung ist größer als die Krümmung der sichelförmigen Anzeigefläche der Umlenkoptik 18. Die stärkere Krümmung der Reflexionsflächen 16 ist erforderlich, um eine gleichmäßige Ausleuchtung der Anzeigefläche zu erreichen und um die Anzeigefläche als homogene ausgeleuchtete Fläche erscheinen zu lassen.

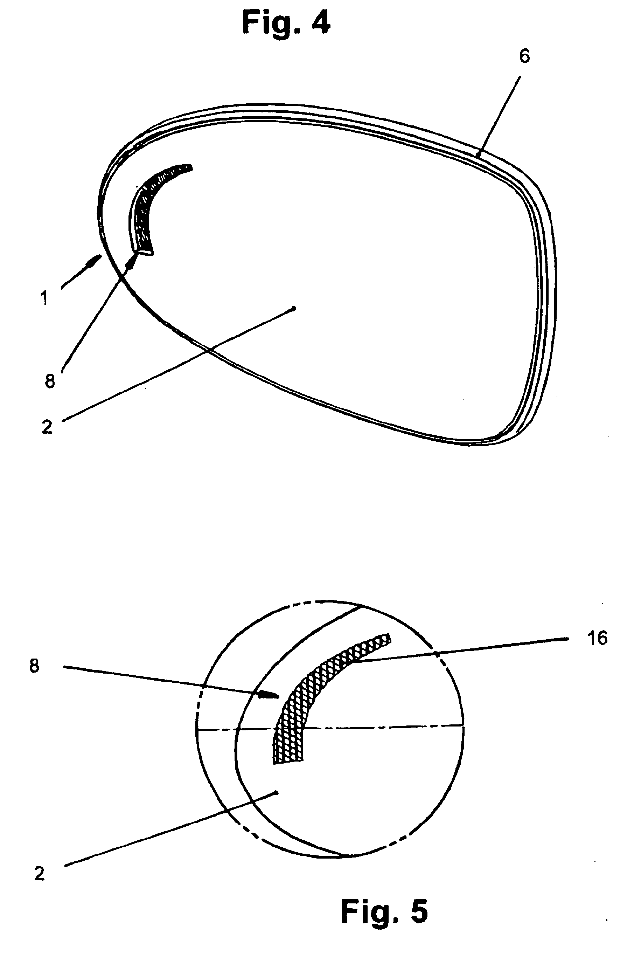

Fig. 4 zeigt das vom Rahmen 6 der Trägerplatte 5 umgebene Spiegelglas 2 mit dem sicherförmigen Anzeigefeld 8, das bei dieser Ausbildung im äußeren Randbereich des Spiegelglases 2 angeordnet ist. Die aus dem Anzeigefeld 8 austretenden Lichtstrahlen 12 werden. wie in Fig. 1 dargestellt, unter einem definierten Winkel in Richtung auf den Fahrer gelenkt und durch die Filterfolie 21 zusätzlich so gerichtet, dass ein nachfolgender Verkehrsteilnehmer die Lichtsignale der Anzeigeeinheit 1 nicht wahrnehmen kann. Dadurch werden der nachfolgende Verkehr oder seitliche Verkehrsteilnehmer nicht irritiert oder verunsichert.

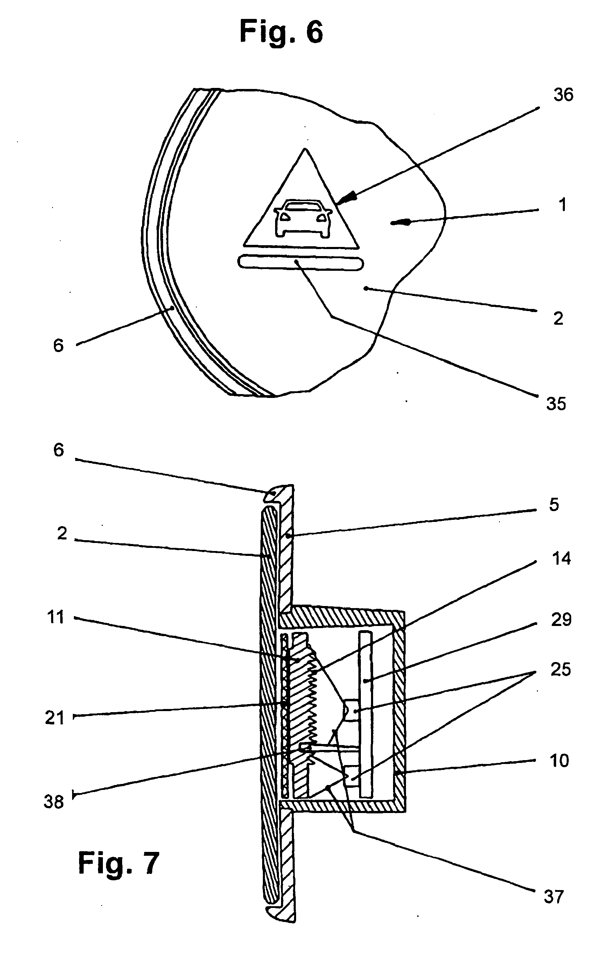

Fig. 5 zeigt eine weitere Ausbildung einer optischen Wiedergabe der Anzeigeeinheit 1. Es kann selbstverständlich jede optische Ausrüstung der Umlenkfläche 19 auf der Umlenkoptik 18 vorgesehen werden. Dies ist beispielsweise vorteilhaft, wenn derartige Anzeigeeinheiten 1 nicht nur als Anzeigen für den Fahrer gedacht sind, sondern beispielsweise zusätzlich die Funktion eines Fahrtrichtungsanzeigers haben sollen. In diesem Fall kann das Anzeigefeld 8 bis an den Rand des Spiegelglases 2 verschoben sein. Diese Position ermöglicht es, einen Fahrtrichtungsanzeiger so zu platzieren, wie er derzeit bei gebräuchlichen Fahrtrichtungsanzeigern zum Einsatz kommt. Ferner ist es denkbar, dass eine Fahrtrichtungsanzeige mit einer Warnanzeige 35 (Fig. 6) zur Informationsübermittlung für den Fahrer kombiniert wird. In diesem Fall ist ein Teil des Anzeigefeldes mit der beschriebenen Umlenkoptik 18 zur Information des Fahrers und ein anderer Teil mit einer Umlenkoptik so gestaltet, dass der nachfolgende Verkehr von den austretenden Lichtsignalen gezielt in Kenntnis gesetzt wird. Derartige Ausführungen setzen voraus, dass mehrere Lichtfunktionen, zum Beispiel Lichtleiterkonstruktionen, kombiniert werden.

Beim Ausführungsbeispiel nach Fig. 6 ist der Randbereich des Spiegelglases 2 mit der Anzeigeeinheit 1 in Form eines Symbols 36 dargestellt. Es besteht beispielsweise aus einem Dreieck mit einem darin befindlichen stilisierten Frontbild eines Fahrzeuges. Unterhalb des Dreieckes ist ein Balken als optischer Warnbalken 35 vorhanden. Beide Anzeigeelemente, das Symbol 36 und der optische Warnbalken 35, können gemeinsam oder unabhängig voneinander in derselben oder in unterschiedlichen Farben Lichtsignale an den Fahrer senden. Es ist beispielsweise möglich, dass das Symbol 36 dem Fahrer ein sich näherndes Fahrzeug signalisiert, während ein zusätzliches Aufleuchten des optischen Warnbalkens 35 auf eine potentielle Gefahrensituation hinweist. In diesem Fall könnte sich ein überholendes Fahrzeug bereits in einer solchen Position zum eigenen Fahrzeug befinden, dass ein seitliches Ausscheren des eigenen Fahrzeuges nicht mehr gefahrlos möglich ist.

Eine beispielhafte konstruktive Ausführung einer solchen kombinierten Anzeigeeinheit 1 zeigt Fig. 7. Die Anzeigeeinheit 1 ist wieder hinter dem Spiegelglas 2 vorgesehen, das auf der Trägerplatte 5 befestigt ist. In einem zumindest teilweise reflexionsfreien Bereich 7 des Spiegelglases 2 ist die Folie als Filter 21 in der beschriebenen Weise angeordnet. In Kontakt mit der Folie 21 ist der Lichtleiter 11 angeordnet, der bei der Ausführungsform durch eine Trennwand 38 in zwei optisch voneinander unabhängige Anzeigebereiche aufgeteilt ist. Zur Erzeugung des Symbols 36 sowie des Warnbalkens 35 sind jeweils eigene Leuchtmittel 25 auf einer gemeinsamen Platine 29 vorgesehen. Die Leuchtmittel 25, vorzugsweise LEDs, weisen entsprechend der auszuleuchtenden Fläche unterschiedliche Lichtabstrahlwinkel 37 auf. Die Trennwand 38 verhindert ein Überschneiden der Lichtkegel, so dass keine Überschneidung und somit keine teilweise Ausleuchtung des Symbols 36 und des optischen Warnbalkens 35 durch eine dieser Funktionen nicht zugeordnete Lichtquelle 25 erfolgt.

Eine genaue Positionierung der Leuchtmittel 35 zum Lichtleiter 11 und des Lichtleiters im Gehäuse 10 sind in diesem Fall von untergeordneter Bedeutung. Die von den LeuchtmitteIn 25 ausgesandten Strahlen 12 müssen nicht hinsichtlich möglicher Reflexionsflächen des Lichtleiters 11 genau positioniert werden. Somit kann in diesem Fall der Lichtleiter 11 als flächiges Bauteil ausgebildet sein. Die Filterfolie 21 kann hierbei vorteilhaft auf eine flache Seite des Lichtleiters 11 aufgebracht werden. Die Positionierung der Anzeigeeinheit 1 zum Spiegelglas 2 erfolgt über die Aufnahme zwischen der Trägerplatte 5 und dem Gehäuse 10. Dies ist von besonderem Vorteil, da somit die gesamte Anzeigeeinheit 1 im Gehäuse 10 vormontiert werden kann. Eine einfache und besonders schnelle Montage der kompletten Anzeigeeinheit kann hiermit erfolgen, ohne dass die Gefahr besteht, dass bei der Montage Fehler auftreten.

Bei einer anderen (nicht dargestellten) Ausführungsform befindet sich die Anzeigeeinheit nicht hinter dem Spiegelglas und der Trägerplatte, sondern ist im Bereich des Rahmens 6 vorgesehen. Er ist an einer oder auch an mehreren Stellen lichtdurchlässig ausgebildet, wie dies für das Spiegelglas 2 im Bereich 8 erläutert worden ist. In diesem lichtdurchlässigen Bereich ist der Rahmen 6 mit dem Filter 21 versehen, durch den das vom Lichtleiter 11 ausgekoppelte Licht so gerichtet wird, dass ein nachfolgender Verkehrsteilnehmer die Lichtsignale der Anzeigeeinheit nicht wahrnehmen kann. Der Lichtleiter 11 ist entsprechend den beschriebenen Ausführungsformen ausgebildet und lediglich so angeordnet, dass das in den Lichtleiter vom Leuchtmittel 25 eingestrahlte Licht mittels der Umlenkoptik 18 in der beschriebenen Weise durch diesen lichtdurchlässigen Bereich nach außen gelenkt wird. Die Wirkung des Lichtleiters 11 ist in diesem Falle gleich wie bei den beschriebenen Ausführungsbeispielen. Der Filter 21 entspricht hinsichtlich Farbe und Erscheinungsbild dem umgebenden Bereich des Rahmens 6, so dass er bei nicht eingeschaltetem Leuchtmittel 25 nicht auffällt, wenn der Benutzer auf den Rahmen 6 schaut.

Abgesehen von der unterschiedlichen Lage des lichtdurchlässigen Bereiches ist der Rückblickspiegel gleich ausgebildet, wie zuvor an Hand der Fig. 1 bis 7 erläutert worden ist.

Das Spiegelglas 2 braucht für den Fall, dass der lichtdurchlässige Bereich im Rahmen 6 vorgesehen ist, keinen eigenen lichtdurchlässigen Bereich. Selbstverständlich ist es aber auch möglich, dass das Spiegelglas 2 zusätzlich wenigstens einen lichtdurchlässigen Bereich aufweist.

## Patentansprüche

1. Rückblickspiegel für Fahrzeuge, vorzugsweise für Kraftfahrzeuge, mit einem auf einer Trägerplatte (5) befestigten Spiegelglas (2), einer hinter dem Spiegelglas (2) und der Trägerplatte (5) angeordneten Anzeigeeinheit (1), die mit wenigstens einem Leuchtmittel (25) einen Lichtstrahl (12) erzeugt, der in einen Lichtleiter (11) einkoppelbar ist, der mit einer Reflektorseite (15) und mit einer Auskoppeloptik (18) versehen ist, mit der der Lichtstrahl (12) durch wenigstens einen mindestens teilweise reflexionsfreien Bereich (7) des Spiegelglases (2) nach außen gelenkt wird,
**dadurch gekennzeichnet, dass** die Reflektorseite (15) mindestens zwei Reflexionsflächen (16) aufweist, und dass das durch das Spiegelglas (2) hindurchtretende Licht durch die Auskoppeloptik (18) in Richtung auf den Fahrer gelenkt wird.

2. Spiegel nach Anspruch 1,
**dadurch gekennzeichnet, dass** eine Einkoppeloptik (14) des Lichtleiters (11) so ausgebildet ist, dass die Lichtstrahlen (12) im Lichtleiter (11) parallel zueinander geleitet werden.

3. Spiegel nach Anspruch 2,
**dadurch gekennzeichnet, dass** die Einkoppeloptik (14) eine Sammeloptik ist.

4. Spiegel nach einem der Ansprüche 1 bis 3,
**dadurch gekennzeichnet, dass** die Lichtstrahlen (12) im Lichtleiter (11) nach dem Eintritt im Einkoppelbereich (14) etwa parallel zum Spiegelglas (2) verlaufen.

5. Spiegel nach Anspruch 1,
**dadurch gekennzeichnet, dass** zwischen den einzelnen Reflexionsflächen (16) Trennflächen (17) vorgesehen sind, die im Wesentlichen parallel zu den im Wesentlichen parallelen Lichtstrahlen (12) liegen.

6. Spiegel nach Anspruch 1,
**dadurch gekennzeichnet, dass** die Umlenkoptik (18) im Wesentlichen aus quer zu den Lichtstrahlen (12) angeordneten Umlenkflächen (19) besteht, die die Lichtstrahlen (12) in Richtung auf den Fahrer lenken.

7. Spiegel nach Anspruch 6,
**dadurch gekennzeichnet, dass** zwischen den Umlenkflächen (19) Trennflächen (20) liegen, die im Wesentlichen parallel zu den Lichtstrahlen (12) verlaufen.

8. Spiegel nach Anspruch 6 oder 7,
**dadurch gekennzeichnet, dass** die Umlenkflächen (19) der Umlenkoptik (18) im Wesentlichen innerhalb der Projektion der von den Reflexionsflächen (16) umgelenkten Lichtstrahlen (12) angeordnet sind.

9. Spiegel nach einem der Ansprüche 1 oder 6 bis 8,
**dadurch gekennzeichnet, dass** die Umlenkoptik (18) an einer Außenseite des Lichtleiters (11) vorgesehen ist.

10. Spiegel nach einem der Ansprüche 1 bis 9,
**dadurch gekennzeichnet, dass** der Lichtleiter (11) zur Ausrichtung gegenüber dem Leuchtmittel (25) über eine Bezugsfläche (13) mit der Trägerplatte (5) verbunden ist.

11. Spiegel nach einem der Ansprüche 1 bis 10,
**dadurch gekennzeichnet, dass** der Lichtleiter (11) mindestens zwei, vorzugsweise mehrere nebeneinander angeordnete Lichtleitersegmente aufweist.

12. Spiegel nach Anspruch 11,
**dadurch gekennzeichnet, dass** die Lichtleitersegmente einstückig miteinander ausgebildet sind.

13. Spiegel nach einem der Ansprüche 1 bis 12,
**dadurch gekennzeichnet, dass** der Lichtleiter (11) und das Leuchtmittel (25) in einem auf der Trägerplatte (5) vorzugsweise dichtend befestigten Gehäuse (10) untergebracht sind.

14. Spiegel nach einem der Ansprüche 1 bis 13,
**dadurch gekennzeichnet, dass** das Leuchtmittel (25) eine LED ist.

15. Spiegel nach einem der Ansprüche 1 oder 6-14,
**dadurch gekennzeichnet, dass** die Umlenkoptik (18) und der zumindest teilweise reflexionsfreie Bereich (7) in Form wenigstens eines Symbols (36) ausgebildet sind.

16. Spiegel, insbesondere nach einem der Ansprüche 1 bis 15,
**dadurch gekennzeichnet, dass** zwischen dem Lichtleiter (11) und der Rückseite des Spiegelglases (2) wenigstens ein Filter (21) angeordnet ist, der das aus dem Lichtleiter (11) austretende Licht nur in der Abstrahlrichtung durchlässt.

17. Spiegel nach Anspruch 16,
**dadurch gekennzeichnet, dass** der Filter (21) eine Folie ist.

18. Spiegel nach Anspruch 16 oder 17,
**dadurch gekennzeichnet, dass** der Filter (21) kraftschlüssig zwischen dem Lichtleiter (11) und der Rückseite des Spiegelglases (2) gehalten ist.

19. Spiegel nach Anspruch 16 oder 17,
**dadurch gekennzeichnet, dass** der Filter (21) auf der Rückseite des Spiegelglases (2) verklebt ist.

20. Spiegel nach einem der Ansprüche 16 bis 19,
**dadurch gekennzeichnet, dass** der Filter (21) im Wesentlichen den zumindest teilweise reflexionsfreien Bereich (7) des Spiegelglases (2) ausfüllt.

21. Spiegel nach einem der Ansprüche 16 bis 20,
**dadurch gekennzeichnet, dass** der Filter (21), von der Außenseite des Spiegelglases (2) aus gesehen, der umgebenden reflektierenden Beschichtung (3) des Spiegelglases (2) in Farbe und Erscheinung entspricht.

22. Spiegel nach einem der Ansprüche 16 bis 21,
**dadurch gekennzeichnet, dass** die lichtdurchlässigen Bereiche des Filters (21) in Form wenigstens eines Symbols (36) ausgebildet sind.

23. Spiegel, insbesondere nach einem der Ansprüche 1 bis 22,
**dadurch gekennzeichnet, dass** das Spiegelglas (2) von einem Rahmen (6) umgeben ist, der wenigstens einen lichtdurchlässigen Bereich aufweist, und dass das durch diesen Bereich hindurchtretende Licht in Richtung auf den Fahrer gelenkt wird.

## Claims

1. A rear view mirror for vehicles, in particular for motor vehicles, comprising a mirror glass (2) attached to a support plate (5), a display unit (1) disposed behind the mirror glass (2) and the support plate (5), the display unit generating a light beam (12) through at least one illuminant (25), wherein the light beam can be coupled into a light conductor (11), which is provided with a reflector side (15) and decoupling optics (18), through which the light beam (12) is directed outward through at least a portion (7) of the mirror glass (2), which is at least partially non reflective, wherein the reflector side (15) comprises at least two reflection surfaces (16) and the light passing through the mirror glass (2) is directed in a direction towards the driver through the decoupling optics (18).

2. The mirror according to claim 1, wherein coupling optics (14) of the light conductor (11) are configured, so that the light beams (12) in the light conductor (11) are conducted parallel to one another.

3. The mirror according to claim 2, wherein the coupling optics (14) are collection optics.

4. The mirror according to one of the claims 1 through 3, wherein the light beams (12) in the light conductor (11) run approximately parallel to the mirror glass (2) after entering into the coupling portion (14).

5. The mirror according to claim 1, wherein separation surfaces (17) are provided between the particular reflection surfaces (16), wherein the separation surfaces are disposed substantially in parallel to the substantially parallel light beams (12).

6. The mirror according to claim 1, wherein the deflection optics (18) are substantially comprised of deflection surfaces (19), which are disposed transversal to the light beams (12) and direct the light beams (12) in a direction towards the driver.

7. The mirror according to claim 6, wherein separation surfaces (20) are disposed between the deflection surfaces (19), wherein the separation surfaces extend substantially parallel to the light beams (12).

8. The mirror according to claim 6 or 7, wherein the deflection surfaces (19) of the deflection optics (18) are substantially disposed within the projection of the light beams (12) which are deflected by the reflection surfaces (16).

9. The mirror according to claim 1 or claims 6 through 8, wherein the deflection optics (18) are provided on an outside of the light conductor (11).

10. The mirror according to one of the claims 1 through 9, wherein the light conductor (11) is connected with the support plate (5) through a reference surface (13) for alignment of the light conductor (11) relative to the illuminant (25).

11. The mirror according to one of the claims 1 through 10, wherein the light conductor (11) comprises at least two, preferably plural light conductor segments that are arranged adjacent to one another.

12. The mirror according to claim 11, wherein the light conductor segments are configured integrally with one another.

13. The mirror according to one of the claims 1 through 12, wherein the light conductor (11) and the illuminant (25) are disposed in a housing (10) attached to the support plate (5), preferably attached in a sealing manner.

14. The mirror according to one of the claims 1 through 13, wherein the illuminant (25) is an LED.

15. The mirror according to one of the claims 1 or 6 through 14, wherein the deflection optics (18) and the at least partially non reflective portion (7) are configured in a shape of at least one symbol (36).

16. A mirror, in particular according to one of the claims 1 through 15, wherein at least one filter (21) is disposed between the light conductor (11) and the backside of the mirror glass (2), wherein the filter passes light exiting from the light conductor (11) only in emission direction.

17. The mirror according to claim 16, wherein the filter (21) is a foil.

18. The mirror according to claim 16 or 17, wherein the filter (21) is retained through friction locking between the light conductor (11) and the backside of the mirror glass (2).

19. The mirror according to claim 16 or 17, wherein the filter (21) is glued to the backside of the mirror glass (2).

20. The mirror according to one of the claims 16 through 19, wherein the filter (21) substantially fills out the at least partially non reflective portion (7) of the mirror glass (2).

21. The mirror according to one of the claims 16 through 21, wherein the filter (21), viewed from the outside of the mirror glass (2), corresponds to the surrounding reflective coating (3) of the mirror glass (2) with respect to color and appearance.

22. The mirror according to one of the claims 16 through 21, wherein the light permeable portions of the filter (21) are configured in the shape of at least one symbol (36).

23. A mirror, in particular according to one of the claims 1 through 22, wherein the mirror glass (2) is surrounded by a frame (6), which comprises at least one light permeable portion, and the light passing through the portion is directed towards the driver.

## Revendications

1. Rétroviseur pour véhicules, de préférence pour véhicules automobiles, comprenant un verre à glace (2) fixé sur une plaque support (5), un module d'affichage (1) disposé derrière le verre à glace (2) et la plaque support (5) qui génère un rayon lumineux (12) avec au moins un agent lumineux (25), rayon qui peut entrer dans une fibre optique (11) qui est pourvue d'un côté réflecteur (15) et d'un système optique de sortie (18) avec lequel le rayon lumineux (12) est dirigé vers l'extérieur par au moins une zone (7) au moins partiellement exempte de réflexion du verre à glace (2),
**caractérisé en ce que** le côté réflecteur (15) présente au moins deux surfaces de réflexion (16) et que la lumière traversant le verre à glace (2) est dirigé par le système optique de sortie (18) en direction du conducteur.

2. Rétroviseur selon la revendication 1,
**caractérisé en ce qu'**un système optique d'entrée (14) de la fibre optique (11) est réalisé, de telle sorte que les rayons lumineux (12) soient dirigés parallèlement les uns aux autres dans la fibre optique (11).

3. Rétroviseur selon la revendication 2,
**caractérisé en ce que** le système optique d'entrée (14) est un système optique convexe.

4. Rétroviseur selon l'une quelconque des revendications 1 à 3,
**caractérisé en ce que** les rayons lumineux (12) dans la fibre optique (11) s'étendent, après l'entrée dans la zone d'entrée (14), à peu près parallèlement au verre à glace (2).

5. Rétroviseur selon la revendication 1,
**caractérisé en ce que** des surfaces de séparation (17) qui se situent essentiellement parallèlement aux rayons lumineux (12) essentiellement parallèles, sont prévues entre les surfaces de réflexion individuelles (16) .

6. Rétroviseur selon la revendication 1,
**caractérisé en ce que** le système optique de renvoi (18) se compose essentiellement de surfaces de renvoi (19) disposées transversalement aux rayons lumineux (12), lesquelles surfaces dirigent les rayons lumineux (12) en direction du conducteur.

7. Rétroviseur selon la revendication 6,
**caractérisé en ce que** des surfaces de séparation (20) qui s'étendent essentiellement parallèlement aux rayons lumineux (12), se situent entre les surfaces de renvoi (19).

8. Rétroviseur selon la revendication 6 ou 7,
**caractérisé en ce que** les surfaces de renvoi (19) du système optique de renvoi (18) sont disposées essentiellement au sein de la projection des rayons lumineux (12) renvoyés par les surfaces de réflexion (16).

9. Rétroviseur selon l'une quelconque des revendications 1 ou 6 à 8,
**caractérisé en ce que** le système optique de renvoi (18) est prévu sur un côté externe de la fibre optique (11) .

10. Rétroviseur selon l'une quelconque des revendications 1 à 9,
**caractérisé en ce que** la fibre optique (11) est reliée à la plaque support (5) par le biais d'une surface de référence (13) en vue de l'orientation par rapport à l'agent lumineux (25).

11. Rétroviseur selon l'une quelconque des revendications 1 à 10,
**caractérisé en ce que** la fibre optique (11) présente au moins deux, de préférence plusieurs, segments de fibre optique disposés les uns à côté des autres.

12. Rétroviseur selon la revendication 11,
**caractérisé en ce que** les segments de fibre optique sont réalisés d'une pièce ensemble.

13. Rétroviseur selon l'une quelconque des revendications 1 à 12,
**caractérisé en ce que** la fibre optique (11) et l'agent lumineux (25) sont logés dans un logement (10) fixé de préférence de manière étanche sur la plaque support (5) .

14. Rétroviseur selon l'une quelconque des revendications 1 à 13,
**caractérisé en ce que** l'agent lumineux (25) est une LED.

15. Rétroviseur selon l'une quelconque des revendications 1 ou 6 à 14,
**caractérisé en ce que** le système optique de renvoi (18) et la zone (7) au moins partiellement exempte de réflexion sont réalisés sous la forme d'au moins un symbole (36).

16. Rétroviseur, notamment selon l'une quelconque des revendications 1 à 15,
**caractérisé en ce qu'**au moins un filtre (21) qui laisse passer la lumière sortant de la fibre optique (11) uniquement dans la direction de rayonnement, est disposé entre la fibre optique (11) et le côté arrière du verre à glace (2) .

17. Rétroviseur selon la revendication 16,
**caractérise en ce que** le filtre (21) est un film.

18. Rétroviseur selon la revendication 16 ou 17,
**caractérisé en ce que** le filtre (21) est maintenu par adhérence entre la fibre optique (11) et le côté arrière du verre à glace (2).

19. Rétroviseur selon la revendication 16 ou 17,
**caractérisé en ce que** le filtre (21) est collé sur le côté arrière du verre à glace (2).

20. Rétroviseur selon l'une quelconque des revendications 16 à 19,
**caractérisé en ce que** le filtre (21) remplit essentiellement la zone (7) au moins partiellement exempte de réflexion du verre à glace (2).

21. Rétroviseur selon l'une quelconque des revendications 16 à 20,
**caractérisé en ce que** le filtre (21), vu du côté externe du verre à glace (2), correspond au revêtement réfléchissant environnant (3) du verre à glace (2) au niveau de la couleur et de l'apparence.

22. Rétroviseur selon l'une quelconque des revendications 16 à 21,
**caractérisé en ce que** les zones transparentes du filtre (21) sont réalisées sous la forme d'au moins un symbole (36).

23. Rétroviseur, notamment selon l'une quelconque des revendications 1 à 22,
**caractérisé en ce que** le verre à glace (2) est entouré d'un cadre (6) qui présente au moins une zone transparente, et que la lumière traversant cette zone est dirigés en direction du conducteur.
